# EUROPEAN PATENT SPECIFICATION

(11) **EP 3 803 101 B1**
(45) Date of publication and mention of the grant of the patent: **29.03.2023**
(21) Application number: 19730478.5
(22) Date of filing: 31.05.2019
(51) Int. Cl.: F03B 13/20, F03B 13/16, F03B 13/18, F03B 13/14, F03D 9/00

(54) **RENEWABLE ENERGY CONVERSION APPARATUS**
ERNEUERBARE ENERGIEUMWANDLUNGSVORRICHTUNG
APPAREIL DE CONVERSION D'ÉNERGIE RENOUVELABLE

(30) Priority: 31.05.2018 GB 201808933; 25.01.2019 GB 201901076
(43) Date of publication of application: 14.04.2021
(73) Proprietor: Marine Power Systems Limited, Swansea SA1 2AQ (GB)
(72) Inventor: FOSTER, Graham, Swansea, Wales SA6 8RT (GB)
(74) Representative: Murgitroyd & Company
(86) International application number: PCT/GB2019/051522
(87) International publication number: WO 2019/229476

(56) References cited:
- CN-A- 106 089 559
- US-A1- 2010 264 658
- US-A1- 2011 241 347
- US-A1- 2015 226 176
- US-B2- 8 662 793

## Description

### Field of the Invention

The present invention relates to renewable energy systems, in particular to wave energy systems and floating wind systems.

### Background to the Invention

Wave energy and floating offshore wind energy have both been identified as leading technology options to decarbonise the global energy system. Many sites for these technologies overlap, for example the Atlantic coast of Europe has both an excellent wind resource and an excellent wave resource. Furthermore, both technologies share common challenges such as how to deliver energy to the shore, how to transport and maintain machines at sea, and how to survive storms.

Combining the two technologies in a single device has numerous advantages, for example: the two sources of generation could share a common structure and energy transmission system, reducing capital costs; transportation, installation and maintenance can also be shared further reducing costs; two independent sources of energy allow the machine to continue generating energy in times of high wind but low waves and vice versa; and the energy per area of seabed can be maximised.

Tidal power, a form of hydropower turning the energy from tides into, most commonly, electricity has not been widely adopted but has great potential for electricity generation in the future and can also be viewed as having the potential to combine with wind energy generation in a common structure. In the following description the term Ocean Energy is used to describe wave energy systems and tidal power systems that are forms of hydro power for converting energy from respectively waves or tides into electricity. 'Ocean Energy' has also been quite widely interpreted to include offshore wind energy systems.

In some currently proposed devices, for example that disclosed in GB1808933.4, the wind energy converter is housed in a nacelle at the top of the turbine mast, and the wave energy converters are underwater in separate enclosures. The electrical power output of these two separate energy converters is then combined to provide a common electrical power output for the entire machine. Combining, or partially combining these systems into a single system may have advantages for: complexity and cost; accessibility and maintainability; and weight distribution leading to improved stability.

Relevant example technology is described in, for example, US 2010/264658 and US 2011/241347.

It is therefore desirable to provide an alternative to existing methods deployed for overcoming the problems presented by current attempts to combine two energy harnessing systems such as wind energy and wave energy in one energy converting apparatus.

It is desirable to provide an apparatus arranged to withstand inclement weather, and to harvest wind and wave energy.

It is also desirable to provide an apparatus wherein the energy conversion systems of the wind and wave energy converters are fully or partially combined, and fully or partially co-located in the machine. It is also desirable to position the combined/co-located energy converter in a place in the machine that is easy to access for maintenance and does not destabilise the machine by way of its mass.

### Summary of the Invention

In accordance with a first aspect of the present invention, there is provided a buoyant energy converting apparatus as claimed in the appended claims.

In some embodiments, a buoyant energy converting apparatus is provided for converting energy obtained from renewable energy sources to useful energy, the apparatus comprising:
a wind energy converter;
a buoyant platform arranged to support the wind energy converter in a body of water having a surface and a bed; and
a connection member, the connection member being positioned between the wind energy converter and the buoyant platform and arranged to provide a gap between the wind energy converter and the buoyant platform,
wherein the buoyant platform comprises an in-use configuration in which the buoyant platform is submerged in the body of water, and wherein in the in-use configuration the connection member protrudes through the surface of the body of water such that the wind energy converter is located substantially above the body of water; wherein the apparatus further comprises a wave energy converter in communication with the buoyant platform, the wave energy converter being arranged to convert wave energy from the body of water to the useful energy.

The wave energy converter comprises a wave energy capturing member coupled to a wave energy converting member. Preferably the wind energy converter comprises a wind energy capturing turbine coupled to a wind energy converting member. Preferably the apparatus further comprises a housing, which may in some embodiments be a machinery room. The housing and/or any mount or fixing connecting the housing to the apparatus, may advantageously be robust against the effects of weather, and the housing and/or the mount or fixing, may in some embodiments be weatherproof, weather resistant, rustproof, watertight, and/or water resistant. Preferably the housing is proximate the wind energy converter such that, in the in-use configuration, the housing is located substantially above the body of water. The housing may be arranged to accommodate the wind energy converting member and/or the wave energy converting member. In some more preferable embodiments, the housing may comprise an energy combining member arranged to receive output energy from the wind energy converter, and output energy from the wave energy converter, and further arranged to combine said output energies. In such embodiments, the energy combining member may be arranged to output the combined energies.

Features of the invention are set out in the appended claims. The following features will be understood to be applicable, where suitable, to either the first or second aspect.

The presently described invention provides an apparatus for harvesting wind and wave energy. In preferable embodiments, the energy conversion systems of the wind and wave energy converting members may be, or are, fully or partially combined, and fully or partially co-located in the machine. Preferably, the wind and wave energy converting members are co-located, and preferably combined, in the housing, which in preferable embodiments is a machinery room. In such embodiments, also of benefit are the position of the combined/co-located energy converting members in a place in the apparatus that is easy to access for maintenance and does not destabilise the machine by way of its mass. In the context of the present invention, the term "the machine" will be understood by the skilled addressee to mean "the buoyant energy converting apparatus".

Instability in stormy conditions is preferably reduced in the solution provided by the present invention, when compared with currently available technology. In addition, embodiments comprising the housing to accommodate the wind and wave energy converting members provides for protection and security of these features and improved ease of maintenance.

Another benefit with a combination of the power conversion systems is further reduced costs, increased efficiencies of scale. The housing may be termed using one of a number of descriptors for containing machinery and energy conversion equipment such as plant room, machinery room, engine room.

The described energy converting apparatus preferably overcomes challenges such as: the nacelle for the wind turbine is difficult to access at the top of the mast and adds a large mass in an unstable position; and the wave energy converters are below the sea requiring the returning of the machine to the surface for maintenance, and high levels of sealing and waterproofing.

Combining the power outputs from the wind and wave energy converters ahead of final conversion to electrical energy in preferable embodiments can eliminate duplication of some parts of the energy conversion systems. It also allows for co-location of the combined energy converting members for the wind and wave energy converters, providing easier access for maintenance. It may also allow heavy parts of the energy conversion system to be located in a position that provides improved stability.

Stability of the device in its in-use configuration is provided by the buoyancy of the submerged platform, which preferably acts against one or more mooring lines or tethers to, for example, a bed of the body of water. Said stability creates stable equilibrium of forces that is able to resist loads imparted on the device from wind, waves and tides.

The first aspect of the invention may further comprise a service configuration in which the buoyant platform of the apparatus is at least partially on the surface of the body of water. In this service configuration the apparatus is attached to one or more mooring lines or tethers to, for example, a bed of the body of water. In said configuration, the apparatus may have some degree of partial submergence of the buoyant platform, during which a high degree of stability is achieved whilst allowing access to all parts and systems of the device that require maintenance. In this configuration the wind energy converter (which preferably comprises a wind turbine) may be kept operational whilst the one or more wave energy converters receive maintenance.

The first aspect of invention may additionally comprise a free-floating transport configuration, in which the entire machine is floating on the surface of the body of water and is not connected to said mooring lines or tethers. The machine is stable in this configuration for the purposes of towing across the surface, but stability will be lower than in the in-use and service configurations.

The first aspect of the invention comprises a survival, or storm, configuration. The survival, or storm, configuration is similar to the in-use configuration, but at least energy capturing members of the wave energy converters are non-operational and/or secured or docked more proximate to or adjacent the buoyant platform. Optionally the depth of the buoyant platform may be increased in the survival configuration. Said depth may be increased by shortening the length of said mooring lines or tethers, which may be using an adaptable depth setting means, such as a winch or pulley. The survival configuration reduces the loads transferred by the waves to the machine, increasing stability, and protects the wave energy converter machinery from high forces and high working strokes.

Preferably the wave energy converter comprises a working depth at which the wave energy converter provides an optimal energy conversion; and further wherein buoyant platform in the in-use configuration comprises a buoyant platform depth; wherein said buoyant platform depth is substantially the same as said working depth. Said working depth and said buoyant platform depth may be dependent upon the type of wave energy converter used, and may typically be selected from the range: 5 m to 50 m. More preferably, the buoyant platform depth and/or working depth may be selected from the range: 10 m to 40 m. In examples wherein the wave energy converter comprises an energy capturing float suspended from the buoyant platform using one or more coupling members, the buoyant platform depth and/or working depth may be selected from the range: 15 m to 40 m. In examples wherein the wave energy converter comprises an energy capturing member reciprocally mounted upon a hinge, such as an energy capturing paddle, the buoyant platform depth and/or working depth may be selected from the range: 5 m to 20 m. In examples wherein the wave energy converter comprises an energy capturing member comprising a pressure differential, the buoyant platform depth and/or working depth may be selected from the range: 5 m to 20 m.

In the in-use configuration, the depth of the buoyant platform is beneath the surface of the body of water, preferably at a depth below the majority of the influence of the waves to reduce forces on the buoyant platform from waves, particularly in stormy conditions. Furthermore, the submerged depth of the platform is preferably optimised for the operation of the wave energy converters i.e. there is sufficient depth for the working stroke of the wave energy converters, and/or the required geometrical relationships for the efficient operation of the wave energy converters.

The gap between the buoyant platform and the wind energy converter is bridged by the connection member preferably having a rigid open framework structure. Said rigid open framework structure is intended to minimise the resistance it offers to waves, tides, and to a lesser extent wind, that pass through the structure, reducing forces on the device and improving stability.

Said gap will preferably be understood to be contrary to forms of technology having a wind energy converter, such as a wind turbine, in direct communication with a buoyant platform. In such currently available forms of technology, as discussed above, the level of resistance to movement of a medium (such as water or air) experienced by currently available technology leads to movement, increased tension and also instability in the technology, particularly in stormy conditions.

The term "rigid open framework" will be understood by the skilled addressee to mean a structural component arranged for support and being penetrable by a medium, such that resistance to movement of said medium is minimised (i.e. an open framework is preferably provided). The rigid open framework of the connection member is arranged to provide the gap between the wind energy converter and the buoyant platform. Preferably said gap causes minimum resistance to movement of air or water when the apparatus of the first aspect of the present invention is in use, and as such provides for maximum stability of the apparatus in stormy conditions, in which the extent of movement of said mediums, and their movement speed, and thus the level of resistance produced, would be expected to be greater. Maximum stability is preferably provided by reduced movement of the buoyant platform and the wind energy converter. In embodiments wherein the buoyant platform is tethered to, or otherwise in communication with, the bed of the body of water, maximum stability is also preferably provided by reduced tension in a tethering member, which may preferably be a depth-setting member.

The "open framework" may preferably take on a number of possible forms, provided that in such forms, resistance to movement of a medium, such as water or air, is minimised. Examples of such a framework may include, for instance, a lattice frame, a reticulated frame, a perforated frame, a foraminous frame, a porous frame, a penetrable frame, and/or a skeletal frame.

In the context of one aspect of the present invention, in the in-use configuration the connection member protrudes through the surface of the body of water, and as such, the medium passing through the connection member is preferably water (beneath the surface of the body of water) and air (above the surface of the body of water). In embodiments comprising a service and/or transport configuration, the buoyant platform is preferably substantially floating upon the surface of the body of water in such a configuration, and as such, in said configuration, the medium is preferably air. Minimising resistance to movement of the medium preferably aids stability to the apparatus in normal use and in, for example, stormy conditions, turbulent sea conditions, large waves, and/or high winds.

Preferably the wind energy converter and wave energy converter are arranged to convert each of wind energy and wave energy to a respective interim form of energy, which may for example include mechanical energy, hydraulic energy or DC electrical energy, wherein the respective interim forms of energy may be transferred to a common secondary energy conversion apparatus (which may optionally be comprised within the housing). In such embodiments, the secondary energy conversion apparatus may be arranged to combine the interim forms of energy, and export the combined interim forms of energy as a single form of desired output energy, which may for example include AC electrical energy.

Preferably the apparatus is arranged to convert either the wind energy or the wave energy to mechanical energy using one or more pulleys and gears; is further arranged to transfer the mechanical energy to the common secondary energy conversion apparatus; and the secondary energy conversion apparatus is arranged to convert the mechanical energy to a different form of energy prior to exporting said different form of energy from the apparatus.

Preferably the apparatus is arranged to convert either the wind energy or wave energy to hydraulic energy using one or more hydraulic actuators; is further arranged to transfer the hydraulic energy to the common secondary energy conversion apparatus; and the secondary energy conversion apparatus is arranged to convert the mechanical energy to a different form of energy prior to exporting said different form of energy from the apparatus. The hydraulic actuators may be hydraulic generators or hydraulic rams, or another form of suitable hydraulic actuator which will be appreciated by the skilled addressee.

Preferably the apparatus is arranged to convert either the wind energy or wave energy to a first form of energy; is further arranged to transfer the first form of energy to the common secondary energy conversion apparatus; and the secondary energy conversion apparatus arranged to convert the first form of energy to a second form of energy prior to exporting said second form of energy from the apparatus. The first form of energy may, for example, comprise any suitable form of energy as will be appreciated, such as DC electrical energy. The second form of energy may, for example, comprise any suitable form of energy as will be appreciated, such as AC electrical energy. It will be understood that the first form and the second form of energy comprise different forms of energy. The first form of energy and the second form of energy may, in some embody embodiments, consist of different forms of energy. It will be understood that in all embodiments comprising a secondary energy conversion apparatus, said secondary energy conversion apparatus may be comprised within the housing.

The term "arranged to support the wind energy converter in a body of water" will be understood by the skilled addressee to mean arranged to support the mass of a wind energy converter, such that it is optimally oriented when in use, when the buoyant platform is located within a body of water. This term is not used to imply location of the wind energy converter within the body of water, and notably in the present invention the wind energy converter is preferably supported substantially above the body of water in the in-use configuration.

Preferably the gap defines a storm clearance distance, the storm clearance distance being a distance that is long enough for the wind energy converter to remain above the surface of the body of water in the in-use configuration, and/or the storm configuration.

Preferably the body of water is a sea or an ocean.

The term "in-use configuration" is used herein to mean a necessary configuration of the invention when carrying out its primary use, that is to convert energy from renewable energy sources to the useful energy.

The term "submerged" will be understood to mean located completely below the surface of the body of water. The term "substantially above the body of water" will be understood by the skilled reader to mean that the wind energy converter is not in contact with the body of water in the in-use configuration.

In some preferable embodiments the wave energy converter comprises an energy capturing member that is moved by the waves coupled to the buoyant platform via an energy converting member (also described as "energy converting means" and "energy conversion means"). In the context of the present invention, any terms used referring to the energy converting "member" will be understood by the skilled addressee to include, for example, any suitable multi-part energy converting device such as an energy transducing apparatus. It will be appreciated that the term "member" is therefore not intended to be limited to a portion or single-part device, but may include such a device within its meaning. The energy converting means is preferably positioned on or proximate to the buoyant platform, but may be positioned on another part of the apparatus, or on the energy capturing member. Therefore, in these embodiments, energy is generated by the relative movement between the energy capturing member and the buoyant platform of the device. In some embodiments, the energy capturing member may be coupled to one or more energy converting members.

In some preferred embodiments of the invention the wave energy capturing member comprises a buoyant float coupled to an energy conversion means, by one or more tethers. The float is positioned on or close to the surface of the body of water in normal use, but the depth of the float can be adjusted by adjusting the length of the tethers, so that energy capture can be reduced in large waves by increasing the depth of the float, and ceased altogether in storm conditions by retracting the float to be completely adjacent to, or within, the buoyant platform.

As the float is buoyant and the distance between the float and the energy converting member, or means, is controlled by the length of the tethers, the float can be made to self-deploy when the machine is put into its in-use configuration, and likewise the float can self-recover when the machine is taken from the in-use configuration into one of the surface-based configurations.

Preferably the length of the tether is adjusted as an integral function of the energy conversion means. The energy conversion means preferably comprises a line- or tether-storage drum, onto which the tethers are wound on and off as the float is moved by the waves. The winding on and off actuates a winch which acts as a generator to generate useful energy and preferably may also perform the simultaneous function of line- or tether-length adjustment via the input of a control system. The winch/generator could be an electrical motor/generator or a hydraulic motor/generator.

An example of a suitable wave energy converter would be the Marine Power Systems WaveSub (RTM).

In embodiments comprising a storm configuration, or survival configuration, the winch is preferably used to reduce the distance between the energy capturing member and the energy converting member such that the energy capturing member is on, within or proximate the buoyant platform. Preferably the apparatus comprises a control system having a sensor arranged to detect one or more parameters characteristic of a storm. Preferably the control system is further arranged to configure the apparatus into the storm configuration when parameters characteristic of a storm are detected, wherein said configuration by the control systems preferably includes actuation of said winch, which may occur simultaneously to energy capturing.

In other preferred embodiments, the wave energy converter comprises an energy capturing member that is a hinged flap that is able to rotate in a reciprocal fashion on its hinge, backwards and forwards with the motion of the waves. Such an energy conversion means would comprise a suitable mechanism to resist the reciprocal motion of the flap, suitable mechanisms being a hydraulic ram, a linear electrical generator, or a direct drive electrical generator about the hinge.

The flap could be arranged to self-deploy and self-recover using buoyancy in a similar way to the float of the above described embodiments. In such embodiments, said flap may comprise a buoyant portion. To attain a storm configuration in such embodiments, the energy conversion means may be used to pull the flap flat against the buoyant platform to minimise resistance against motion of stormy seas.

In further preferred embodiments the wave energy converter comprises a submerged pressure differential wave energy converter that uses the changing pressure of waves passing over the machine to generate energy. A chamber of compressed gas is further compressed or allowed to expand by the changing pressure above it, as a wave passes over the chamber (a wave crest corresponds to an increased water depth and therefore a corresponding increased water pressure, whilst a wave trough corresponds to a decreased water depth and therefore a corresponding decreased water pressure). The chamber can be mechanically coupled to a prime mover that moves up and down and can be resisted by an energy conversion means, for example a hydraulic ram, a linear generator or a gear driven rotational generator.

In other embodiments of the machine that comprise a submerged pressure differential wave energy converter, chambers of compressed air can be spaced apart on the device and arranged so that the waves passing overhead cause air to flow back and forth between chambers or in a circulating path through the chambers. Energy extraction in this case would typically comprise an air turbine positioned to be impelled by the air flowing between, around or through the chambers, either directly or via ducting.

Preferably the buoyant platform comprises an adaptable depth-setting member arranged to define, over a predetermined range,
a depth between an uppermost surface of the buoyant platform and the surface of the body of water.

The adaptable depth-setting member (otherwise referred to herein as a "depth-setting means) preferably comprises at least one mooring line or tether arranged to tether the buoyant platform to the bed of the body of water, and a means to adjust the length of the at least one mooring line or tether, for example a winch, in order to define the depth.

Preferably, in embodiments comprising a storm, or survival, configuration, the storm configuration comprises a storm clearance depth, wherein the storm clearance depth is preferably equal to, or greater than, 20 m. Preferably the adaptable depth-setting member is arranged to adjust the depth to the storm clearance depth in storm conditions. Preferably, in embodiments comprising a control system arranged to detect parameters characteristic of a storm, the control system is arranged to actuate the adaptable depth-setting member to achieve the storm clearance depth when parameters characteristic of a storm are detected.

Preferably the buoyancy of the buoyant platform is arranged to provide an adequate tension in the depth-setting means, wherein the adequate tension provides a stability to the buoyant platform when in the in-use, service, survival or storm configurations. Preferably the buoyant platform comprises a positive buoyancy.

Preferably the stability and the tension in the depth-setting means is arranged to substantially inhibit movement of the buoyant platform.

In the context of the present invention, stability is to be taken to mean the lack of unnecessary movement of the apparatus and/or the lack unnecessary tension upon said apparatus. Said unnecessary movement may typically be caused by movement of the water within the body of water, or movement of air above the body of water. Preferably the tension in the depth-setting member, caused by the positioning of the depth-setting member on the buoyant platform and the positive buoyancy of the buoyant platform is sufficient to limit movement of the apparatus within the body of water.

Preferably the depth-setting member (which may include a mooring tether) comprises a substantially non-elastic material or a material of limited but known elasticity. Preferably the substantially non-elastic or limited elasticity material comprises one selected from the range: steel chain, steel rope, nylon rope, Dyneema (RTM) rope. A degree of limited elasticity in the mooring tethers may be beneficial in some embodiments to avoid sudden `snatch' load in the system in certain circumstances.

As described above for the energy converting member, in the context of the present invention, any terms used referring to the depth-setting "member" will be understood by the skilled addressee to include, for example, any suitable multi-part depth-setting device such as a mooring apparatus. It will be appreciated that the term "member" is therefore not intended to be limited to a portion or single-part device, but may include any type of device within its meaning.

Preferably the connection member defines a connection distance between the buoyant platform and the wind energy converter, wherein in the in-use configuration, the connection distance is greater than the depth. In accordance with preferable embodiments, the connection distance defined by the connection member is greater than the depth of the buoyant platform in the in-use configuration.

Preferably the wind energy converter comprises a wind turbine. Preferably the wind turbine is a horizontal axis wind turbine. Preferably the wind turbine comprises a tower, a nacelle and a plurality of blades; and wherein in the in-use configuration, the tower of the wind turbine is substantially above the surface of the body of water. Embodiments will be appreciated wherein the wind energy converter may comprise a vertical axis wind turbine, or a kite power wind energy converter.

The connection member, providing a gap between the wind energy converter and the buoyant platform, preferably comprises space within the gap, a cavity or housing, arranged to accommodate equipment. Preferably the equipment includes energy conversion apparatus and any further equipment that aids the installation, maintenance and repair of the apparatus. In some embodiments, it may be beneficial that said equipment remain substantially dry. As such, in some preferable embodiments, the equipment may be stored at a position which, in the in-use configuration, is located substantially above the surface of the body of water, and preferably on the top of the connection member.

Preferably at least a portion of the buoyant platform comprises a reticulated frame arranged to permit passage of water substantially through the buoyant platform.

Preferably the buoyant platform comprises a frame arranged to minimise the resistance to the flow of a medium and thus limits the likelihood of movement of, and/or forces upon, the apparatus. Said reduced movement and/or forces preferably provides a greater stability in the apparatus and may reduce tension in any depth-setting member.

Preferably at least one of:
the buoyant platform length;
the buoyant platform width;
the buoyant platform diameter;
is selected from the range 20 to 200 metres.

For embodiments comprising a transport configuration, in the transport configuration, the buoyant platform is arranged to float on the surface of the body of water. Preferably in the transport configuration, the wind energy converter is arranged to convert wind energy to the useful energy. Preferably the transport configuration describes the relationship between the buoyant platform and the surface of the water. In embodiments comprising a depth-setting member, which requires that the buoyant platform be anchored to the bed of the body of water prior to setting the depth of the buoyant platform in said body of water, embodiments are conceivable wherein the depth-setting member optionally may or may not be in communication with the bed of the body of water while the apparatus is in the transport configuration. In embodiments comprising such a depth-setting member, the depth-setting member may not be in communication with the bed of the body of water while the apparatus is being transported in said configuration.

Preferably, in the transport configuration the wave energy converter is above surface of the body of water.

The transport configuration is preferably arranged to be used when the apparatus of the present invention is undergoing maintenance or repair on-site, or being transported to the desired site at which the apparatus will be installed. Preferably said floating of the buoyant platform provides for easy transport of the apparatus, which may be by towing, while the apparatus is in the transport configuration. Preferably while the apparatus is being transported, maintained or repaired, wherein said maintenance or repair is being performed on an element other than the wind energy converter, the wind energy converter is preferably arranged to convert wind energy to the useful energy. In embodiments comprising a wave energy converter, the wind energy converter is preferably arranged to remain functional during maintenance and repair of said wave energy converter.

Preferably, in the transport configuration all working parts are above surface of the body of water. Preferably having all working parts above the surface of the body of water in the transport configuration enables easier maintenance and transport of the apparatus.

Preferably the apparatus comprises a power umbilical arranged to transport energy to an energy grid and/or an energy storage device.

Preferably the buoyant platform comprises an adaptable buoyancy, wherein the buoyancy of the buoyant platform can be adjusted to position the buoyant platform at a desired depth in the body of water. Preferably the adaptable buoyancy can be used in conjunction with the adaptable depth-setting means to adjust the depth of the buoyant platform and/or to adjust the tension in the corresponding mooring lines or tethers. Preferably the buoyancy of the buoyant platform can be adapted by altering the ratio of air to liquid comprised within buoyant portions of the buoyant platform.

In accordance with a second aspect of the present invention, there is provided a buoyant energy converting apparatus for converting energy obtained from renewable energy sources to useful energy, the apparatus comprising:
a wind energy converter comprising a wind energy capturing turbine coupled to a wind energy converting member; a housing arranged to accommodate the wind energy converting member; the housing located proximate the wind energy capturing turbine;
the apparatus further comprising a buoyant platform arranged to support the wind energy converter and the housing in a body of water, the body of water having a surface and a bed;
a connection member comprising a rigid open framework, the connection member being positioned between the housing and the buoyant platform and arranged to provide a gap between the wind energy converter and the buoyant platform,
the apparatus further comprising a wave energy converter in communication with the buoyant platform, the wave energy converter being arranged to convert wave energy from the body of water to useful energy, wherein the wave energy converter comprises a wave energy capturing member coupled to a wave energy converting member and wherein the wave energy converting member is located in the housing.

The features listed hereinafter will be understood as applicable to an apparatus according to either the first or second aspect of the present invention.

Preferably the apparatus is a floating wind apparatus. More preferably, the apparatus is a tension leg floating wind apparatus.

Wind energy captured by the wind turbine is converted by a primary wind energy converter into a more useful form of energy such as a rotational energy or hydraulic energy which can then be transferred down the wind turbine mast to a machinery room by an energy transfer means such as a rotational driveshaft, a drivebelt, or a hydraulic line.

In the cases of the of the energy transfer means being a rotational driveshaft or a drivebelt the primary energy converter would be a mechanical gear system. In the case of the energy transfer means being a hydraulic line then the primary energy converter would be a hydraulic motor.

Wave energy captured by the wave energy capturing floats can be transferred to the machinery room by mechanical lines or by hydraulic lines. In the case of the energy transfer means being a mechanical line then the primary energy converter would be the mechanical line acting in combination with a pulley wheel or wheels. In the case of the energy transfer means being a hydraulic line then the primary energy converter would be a hydraulic motor.

The machinery room contains the secondary energy converters which convert the energy supplied to it by the wind energy transfer means and the wave energy transfer means to electricity.

The machinery room is situated at the top of the connection member in a position on the device that is more accessible than the primary energy converters for either of the wind or wave energy, the primary wind energy converter being at the top of the wind turbine mast, and the primary wave energy converters being underwater.

The position of the machinery room at the top of the connection member improves stability by removing mass from the top of the wind turbine mast which is an unstable position due to its height.

The secondary energy converters convert the energy from the wind and wave energy transfer means to electricity. In the case that the supply of energy from either of the wind or wave energy transfer means is mechanical, then the secondary energy converter may be an electrical generator with appropriate gearing. In the case that the supply of energy from either of the wind or wave energy transfer means is hydraulic then the secondary energy converter may be hydraulic motor coupled to an electrical generator.

The secondary energy converters may be combined into a single system. For example, if mechanical energy is being supplied by both the wave and wind energy transfer means then both energy transfer means could be coupled to a common shaft or flywheel via appropriate connectors and gearing. If the energy both energy transfer means are hydraulic then they can be connected to a common hydraulic motor via appropriate hydraulic circuitry and accumulators.

Preferably the apparatus of the second aspect may comprise any suitable feature of the first aspect.

### Detailed Description

Specific embodiments will now be described by way of example only, and with reference to the accompanying drawings, in which:
FIG. 1 shows an isometric view of a first example embodiment of a buoyant energy converting apparatus in accordance with the present invention;
FIG. 2a shows a close-up isometric view of the first example embodiment of the buoyant energy converting apparatus from FIG. 1;
FIG. 2b shows a close-up isometric view of an alternative to the first example shown in FIG. 2a;
FIG. 3 shows a lateral view of the first example embodiment of the buoyant energy converting apparatus from FIG. 1 in a service configuration;
FIG. 4 shows a lateral view of the first example embodiment of the buoyant energy converting apparatus from FIG. 1 in an in-use configuration;
FIG. 5 shows a lateral view of the first example embodiment of the buoyant energy converting apparatus from FIG. 1 in a survival, or storm, configuration;
FIG. 6 shows an isometric view of a second example embodiment of a buoyant energy converting apparatus in accordance with the present invention;
FIG. 7 shows an isometric view of a third example embodiment of a buoyant energy converting apparatus in accordance with the present invention;
FIG. 8 shows an isometric view of a fourth example embodiment of a buoyant energy converting apparatus in accordance with the present invention;
FIG. 9 shows a lateral view of the fourth example embodiment of the buoyant energy converting apparatus from FIG. 8 in a survival, or storm, configuration;
FIG. 10a shows a close-up isometric partial cutaway view of an alternative example embodiment of the buoyant energy converting apparatus from FIG. 1;
FIG. 10b shows a close-up isometric cutaway view of an alternative to the first example embodiment shown in FIG. 10a;
FIG. 11 shows a close-up isometric partial cutaway view of an alternate example embodiment of the buoyant energy converting apparatuses from FIGs. 10a and 10b;
FIG. 12 shows a further close-up isometric partial cutaway view of the example embodiment shown in FIG. 11;
FIG. 13 shows an isometric view of a fifth example embodiment of a buoyant energy converting apparatus in accordance with the present invention.

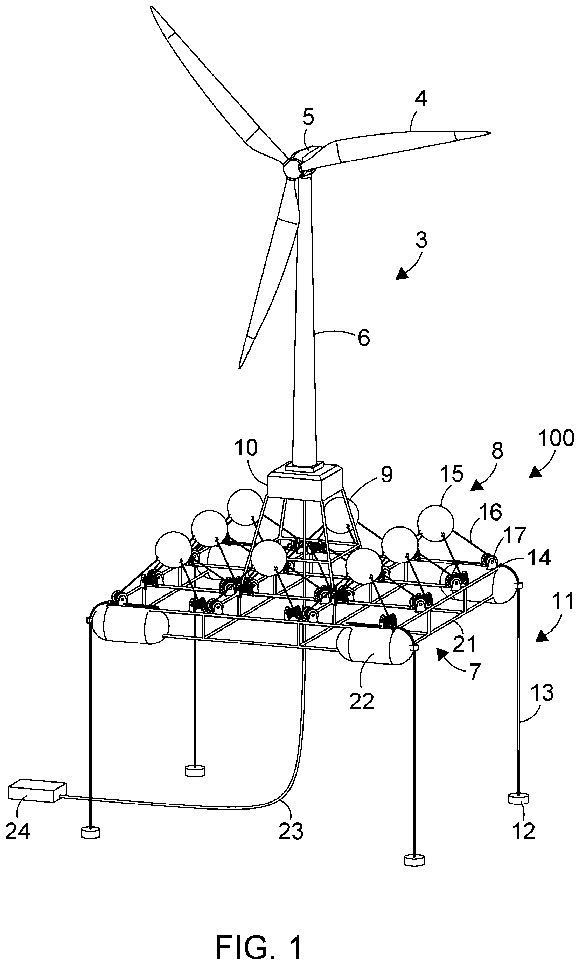

Referring to FIG. 1, an isometric view of an example embodiment of a buoyant energy converting apparatus 100 in accordance with the first aspect of the present invention is shown, positioned within a body of water (not shown) having a surface (not shown) and a bed. The apparatus comprises a wind turbine 3, a buoyant platform 7 and a connection member 9 therebetween. The wind turbine 3 comprises an elongate tower 6 having a first end coupled to a nacelle 5 having a longitudinal axis arranged orthogonally to the longitudinal axis of the tower 6, the nacelle 5 housing a rotational generator (not shown). Coupled to, and extending from, the generator are a plurality of blades 4 arranged in a plane substantially parallel to the longitudinal axis of the tower 6. The tower 6 further comprises a second end coupled to a first end of the connection member 9.

The connection member 9 comprises a lattice framework forming a substantially rectangular frustum, said first end of which having a first end aspect ratio, and a second end having a second end aspect ratio, wherein the first end aspect ratio is smaller than the second end aspect ratio. The second end of the connection member 9 is coupled to a central region of an uppermost surface of the buoyant platform 7.

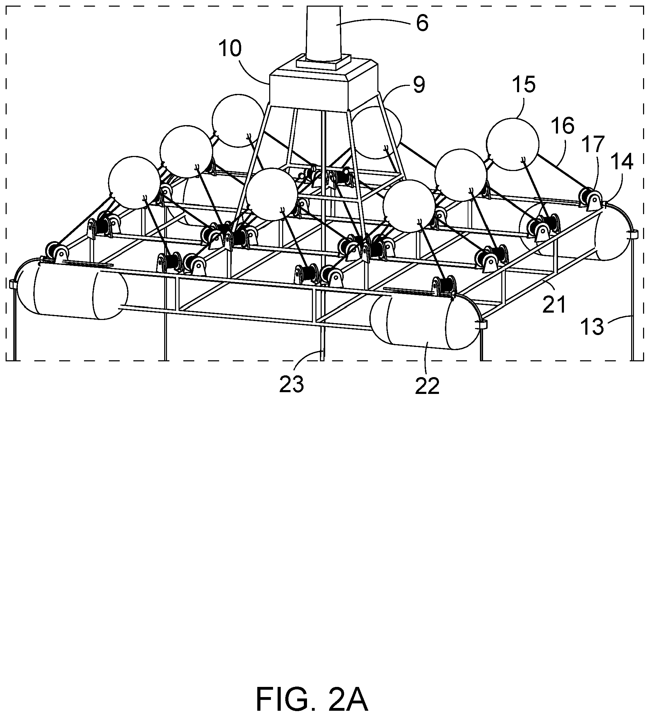

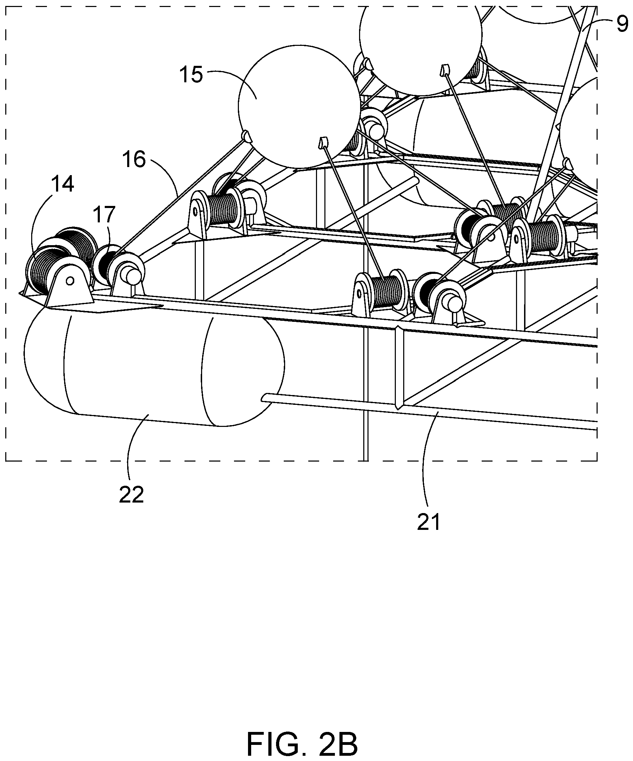

The buoyant platform 7 comprises a planar structure comprising a substantially rectangular lattice framework 21, and positioned approximately at each of the four corners of the lattice framework 21 is a float (buoyancy chamber) 22, seen more closely in FIG. 2. The longitudinal axis of the buoyant platform 7 is oriented substantially orthogonal to the longitudinal axes of the connection member 9 and the wind turbine 3.

FIGs 1 to 5 illustrate a first example embodiment of a combined wind and wave energy converting apparatus in accordance with the present invention.

In said FIGs 1 to 5, the apparatus 100 is shown positioned in a body of water having a surface 1 and a bed 2 the apparatus comprises a wind turbine 3 which further comprises turbine blades 4, a nacelle 5 and a mast 6. The apparatus further comprises a buoyant platform 7 upon which is a plurality of wave energy converters 8 and connection member 9 upon which the wind turbine 3 in mounted.

The apparatus further comprises a machinery room 10 that is positioned at the top of the connection member 9 and contains power conversion apparatus to convert the energy captured by the wave energy converters and the wind turbine into electricity in a format suitable for export from the machine, for example grid compliant electricity.

The apparatus also comprises moorings 11 that further comprise of anchors 12 positioned on the sea bed 2, mooring lines 13 and depth setting means 14. The mooring lines 13 are typically flexible lines could be either ropes or chains or a combination of the two. The depth setting means would typically be a winch or a chain puller.

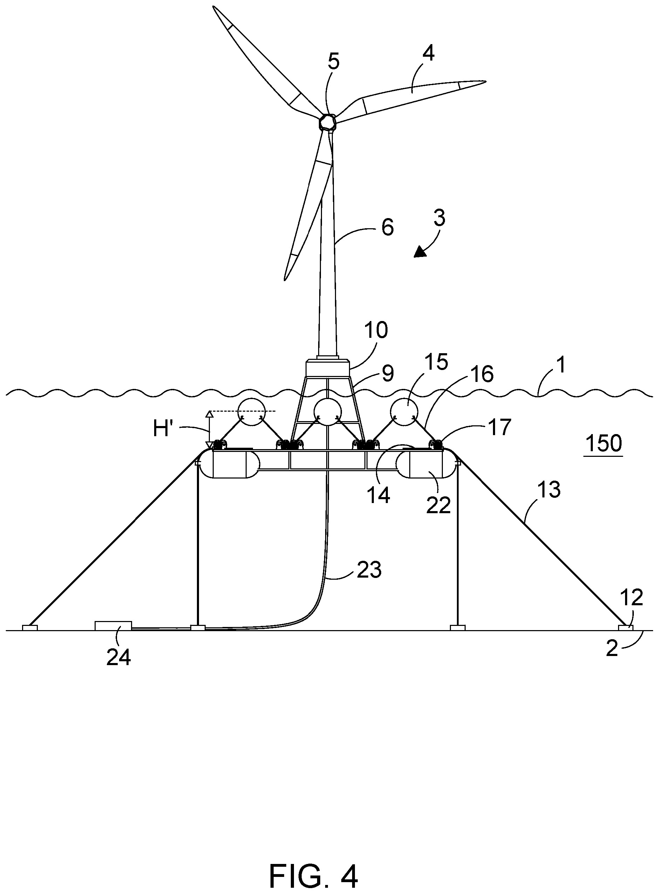

The wave energy converters 8 are typically positioned on the uppermost surface of the buoyant platform 7, each comprising an energy capturing float 15, a plurality of coupling members 16, and a plurality of pulleys 17 that guide coupling members 16 and establish a geometrical relationship with the float 15 in order to optimise energy capture. In an in-use configuration, depicted in FIG. 4, the energy capturing floats 15 of the apparatus 100 are positioned at an optimum height H' relative to the upper surface of the buoyant platform 7, such that an angle A is produced between the coupling member 16 and the upper surface of the buoyant platform 7, said angle being required for optimal energy capture. An example of a typical optimal angle would be 45 degrees, with a range of suitable angles being 15 to 75 degrees. The optimal height H' provides for sufficient clearance between the upper surface of the buoyant platform 7 and the underside of the float 15. Said clearance is a distance which provides optimal wave energy capturing by the energy capturing floats 15. An optimum distance might be selected from the range of 15 m to 50 m.

Each coupling member 16 takes the form of a flexible line and is coupled to an energy converter 18.

Typically, each energy converter 18 would comprise a drum around which the coupling member 16 is wound which is in-turn linked to a rotational generator. The rotational generator, depicted as an example on the end of each drum 17, can also act as a winch to allow the length of the coupling member 16, and therefore the depth of the float 15, to be adjusted. The drum could also be enabled to be driven by a separate winch or other adjustment means (not shown) to allow the length of the coupling member 16 to be adjusted independently of the rotational generator.

The nacelle 5 of the wind turbine 3 contains an energy converter (not shown) that would typically be a rotational electrical generator.

The rotational generators for the wind turbine and the wave energy converters 18 can be any type of generator but would typically be electric generators. Each generator would be part of a common electrical system (not shown) that would connect the electrical output from each generator to a final power conversion stage to allow the apparatus to export power in the required format through a single power output cable 23. The final power conversion stage would comprise of components such as inverters and transformers and is housed in the machinery room 10 to enable easy access for maintenance. The machinery room 10 would also contain a control and communication system (not shown).

Referring to FIG. 4, the example embodiment of a buoyant energy converting apparatus 100 of FIG. 1 is shown in an in-use configuration during mild sea conditions. In the in-use configuration shown, the buoyant platform 7 is submerged beneath the surface 1 of the body of water 150, with the mooring lines 13 of the depth-setting member 14 affixed to their respective anchoring members 12 on the bed 2 of the body of water 150. In the in-use configuration shown, the connection member 9 is shown protruding through the surface 1 of the body of water 150, such that the wind turbine 3 is above the surface 1 of the body of water 150, and is not in contact with the body of water 150. The connection member 9 is shown having a cavity 10 (in this case a machinery room 10) which remains substantially above the surface 1 of the body of water 150 and is arranged to accommodate equipment (not shown). In the in-use configuration shown, the floats 15 of the wave energy converter are positioned proximate the surface 1 of the body of water 150 to capture wave movement.

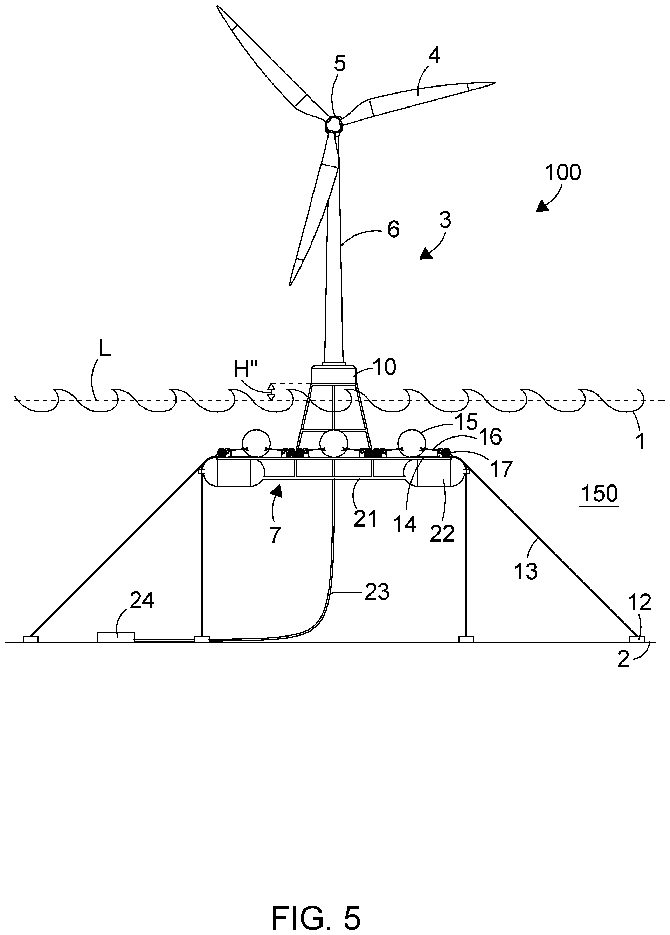

Referring to FIG. 5, the example embodiment of a buoyant energy converting apparatus 100 of FIG. 1 is shown in a storm or survival configuration during a storm, depicted in the embodiment shown by large waves. In the storm configuration shown, the buoyant platform 7 is positioned substantially as it is in the in-use configuration, submerged beneath the surface 1 of the body of water 150, with the mooring lines 13 of the depth-setting member 14 affixed to their respective anchoring members 12 on the bed 2 of the body of water 150. As with the in-use configuration of FIG. 4, in the storm configuration shown in FIG. 5, the connection member 9 is shown protruding through the surface 1 of the body of water 150 as defined by the depth of the buoyant platform 7 within the body of water 150 (determined by the length of the mooring lines 13). The connection member 9 is thus positioned such that the housing 10 is positioned at a housing height H" relative to the mean sea level L, housing height H" ensuring that the housing remains above the surface 1 of the body of water 150. The wind turbine 3 is thus also positioned above the surface 1 of the body of water 150 at all times, and is not in contact with the body of water 150. The floats 5 of the wave energy converters 8 are positioned at the buoyant platform 7 in the storm configuration and are thus optimised for minimum resistance of the apparatus 100 against the large waves, minimising forces on the apparatus 100 and tension of the mooring lines 13 of the depth-setting member 14, and maximum stability of the apparatus 100.

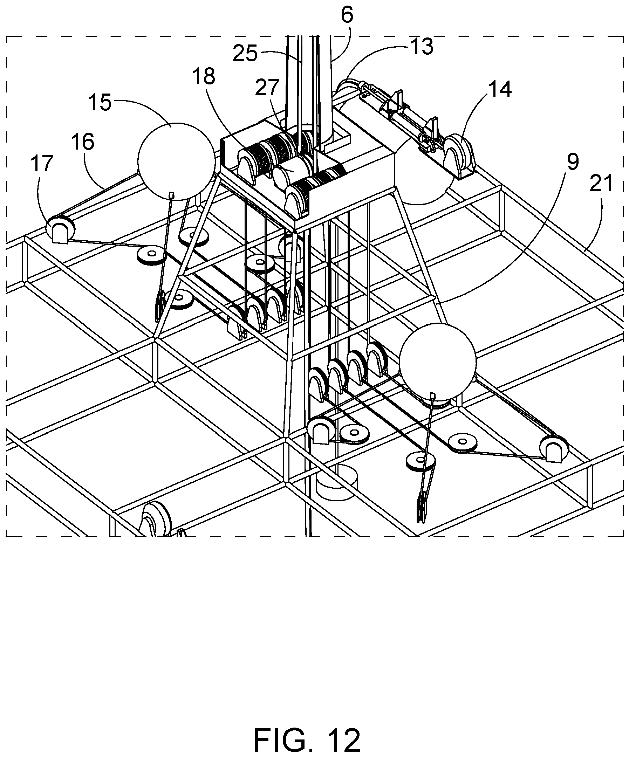

An example of a wave energy converter 8 is shown in FIG. 12, the wave energy converter 8 comprising an energy capturing float 15, energy conversion means 17, and a coupling member 16 coupling the float 15 to energy conversion means 17. The coupling member 16 comprises a flexible line wound around a drum within the energy conversion means 17, the drum being driven by a winch arranged to adjust the distance between the float 15 and the buoyant platform 7. As the floats 15 are moved by waves they alternately extend and contract their respective coupling members 16 and actuate the respective energy conversion means 17, enabling the apparatus to generate power. This type of wave energy converter is exemplary, and other types of wave energy converters could be used on the apparatus.

Also shown in FIG. 12 are mooring winches 14 arranged in pairs of one vertical mooring line 13 (shown) and also arranged to provide one angled mooring line (not shown) on the corners of the buoyant platform 7, however other winch positions are possible.

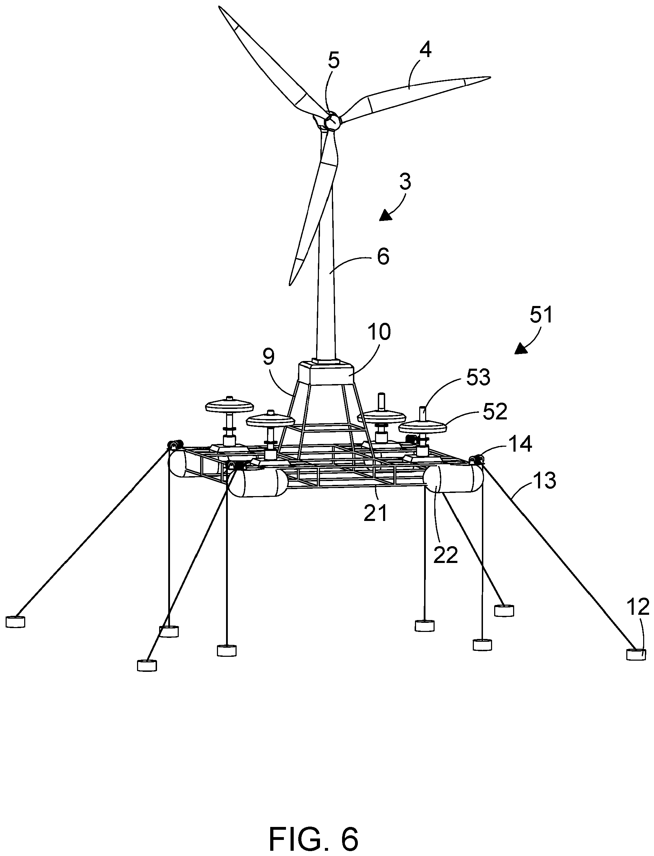

The wave energy converter in the described embodiments should be considered as being for the purpose of exemplification only. For the purpose of illustration, a wave energy converter similar to the Marine Power Systems WaveSub (RTM) has been described. Additional embodiments comprising different wave energy converters will be conceivable, some examples of which will be described in more detail below:
Referring to FIG 6, a second embodiment 51 of the invention is envisaged which is similar to the first embodiment in all aspects except the energy capturing member of the wave energy converters comprises a buoyant disc 52 slideably affixed to a mast 53 and arranged to move freely up and down the mast 53 with the motion of the waves. Embodiments will be appreciated wherein the floating discs are instead immovably affixed to the top of slideable mast similarly arranged to provide energy capture and conversion through a pressure differential. Equivalent numbering as that for the embodiment of FIGs 1 to 5 will be used where appropriate. In the second embodiment 51 the buoyant discs 52 are each in communication with a corresponding coupling member (not shown) which may include a hydraulic ram and an energy transmission line (not shown) that transmit the corresponding captured and/or converted energy and establish a geometrical relationship with the buoyant discs 52 in order to optimise energy capture. In the embodiment shown, the apparatus 51 comprises a buoyant platform 7 positioned at a depth such that the upper surface of the mast 53 is an optimal clearance distance from the sea surface 1. Said clearance distance provides optimal wave energy capturing by the energy capturing discs 52. An optimum clearance distance for said mast 53 might be selected from the range of 10 m to 50 m.

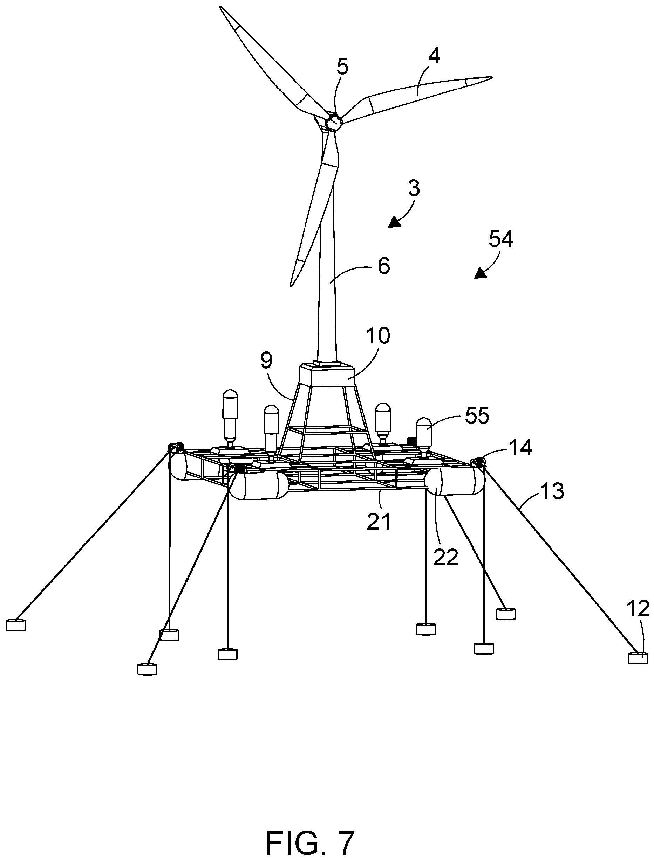

A third embodiment 54, similar to the second embodiment 51, is shown in FIG. 7, wherein the features are substantially the same and equivalent numbering thereof is used. In the fourth embodiment 54 of FIG. 7, the buoyant discs 52 are exchanged for elongate floats 55. The apparatus 54 comprises a buoyant platform 7 positioned at a depth such that the upper surface of the floats 55 is an optimal clearance distance from the sea surface 1. Said clearance distance provides optimal wave energy capturing by the energy capturing floats 55. An optimum clearance distance for said floats 55 might be selected from the range of 15 m to 40 m.

Each wave energy converter in the embodiments of FIG. 6 and FIG. 7 takes the form of a pressure differential wave energy converter, and may comprise for example, a hydraulic ram used to capture wave energy from the wave energy capturing discs 52 or floats 54. Such hydraulic mechanisms would transfer the hydraulic energy to an energy converter in the housing 10 by way of energy transfer lines. Alternatively, coupling members may be used which take the form of a flexible line and is guided via pulleys to an energy converter 18 that is located in the machinery room 10. The machinery room 10 is always above the water and therefore the energy converters 18 can be in a dry environment. Each energy converter may comprise a drum around which the coupling member is wound which is in-turn linked to a rotational generator. The rotational generator (not shown) can also act as a winch to allow the length of the coupling member, and therefore the depth of the buoyant discs 52 or elongate floats 55, to be adjusted. The drum could also be enabled to be driven by a separate winch or other adjustment means (not shown) to allow the length of the coupling member to be adjusted independently of the rotational generator. An example can be seen in FIG. 12. Other embodiments of energy capture, transfer and conversion using a pressure differential device will be appreciated, and may for example comprise a membrane arranged to transmit mechanical or kinetic energy, potentially using a hydraulic energy transmission mechanism as described above, as a result of a pressure differential.

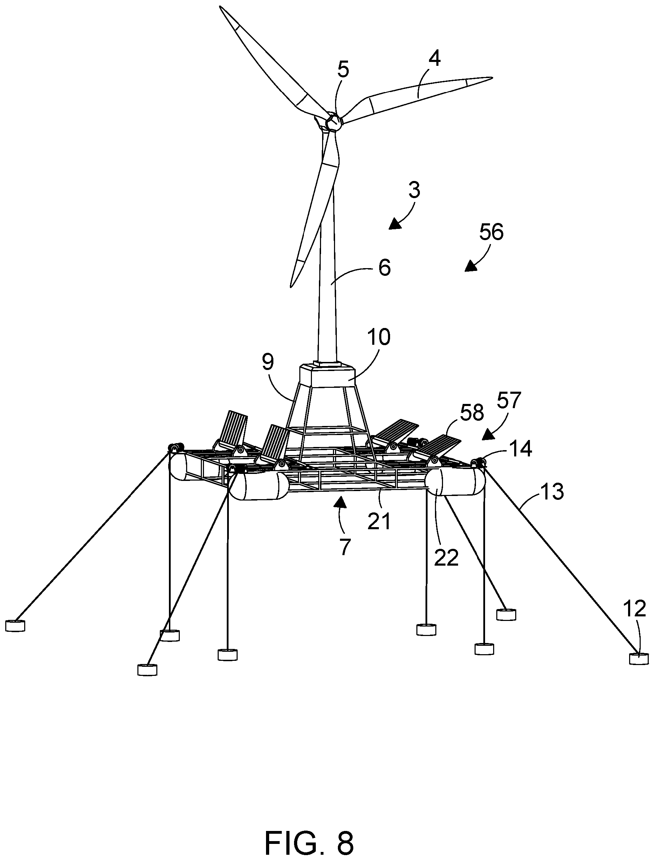

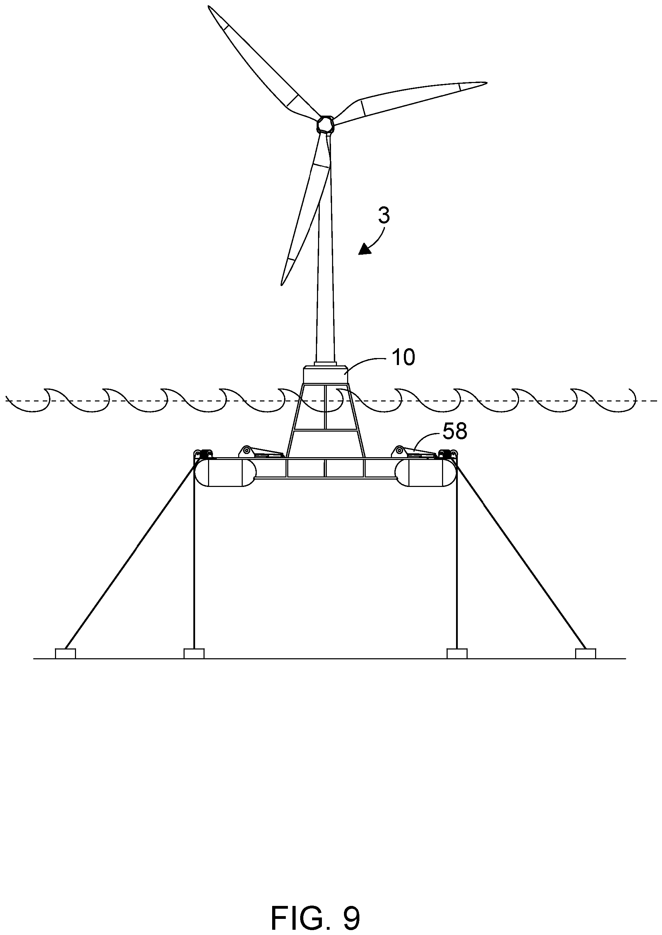

Referring to FIG. 8, an isometric view of a fourth embodiment 56 of the invention is shown similar to that of the second embodiment, and equivalent numbering is used where appropriate. In the fourth embodiment 56 of FIG. 8, the wave energy converter 57 comprises a paddle 58 arranged to rotate about a hinge in a reciprocal fashion between a first position in which the paddle 58 is adjacent to the buoyant platform 7 at a first principal surface of the paddle 58, and a second position in which the paddle 58 is adjacent to the buoyant platform 7 at a second principal surface of the paddle 58, wherein the first principal surface opposes the second principal surface. In such a way, the paddle 58 my reciprocally rotate about the hinge with the flow of the waves, and consequently drive a rotational generator (not shown). Embodiments will be appreciated wherein the rotational generator will be contained with a machinery room 10 located atop the connection member. FIG. 9 shows the third embodiment of FIG. 8 in a storm configuration, wherein the paddles 58 are positioned adjacent the buoyant platform 7.

In an alternative embodiment (not illustrated) the energy conversion apparatus may be fixed or have a structure suited to the combination of a wind energy conversion system and a tidal power generation system.

The embodiments described show a typical horizontal axis wind turbine, although additional embodiments will be appreciated wherein other types of wind energy capturing devices are used as, as part of, and/or within the wind energy converter, such as, for example, a vertical axis wind turbine, or a kite powered generator system.

The structure of the device is designed so that only relatively thin framework is in the wave zone when the apparatus is in its in-use configuration, reducing wave loads on the device.

To survive storms the floats of the wave energy converter can be retracted against the main structure of the buoyant platform, leaving a large gap between the floats/platform and the wind turbine tower, through which large surging storm waves can pass with minimal loads on the device.

The depth-setting member depicted in the described embodiments comprises four vertical mooring lines and four angled mooring lines to provide a high level stability to the barge platform. Additional embodiments will be appreciated wherein alternative mooring layouts are possible.

The energy transport means in the embodiment shown takes the form of a power umbilical, which exports power from the device to an underwater energy storage member, which in the embodiment shown is a junction box. From the junction box a further cable (not shown) delivers the energy to land.

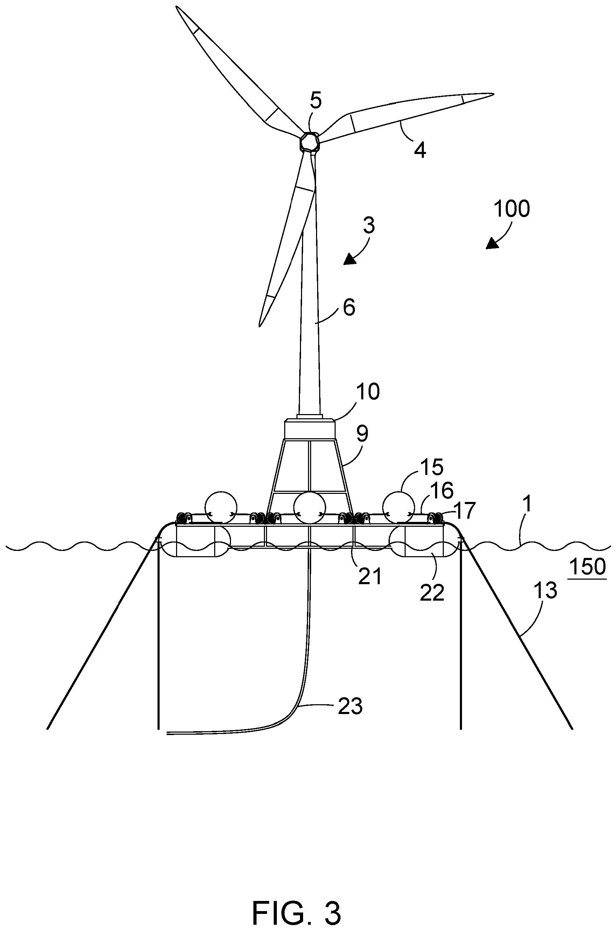

In the transport configuration shown in FIG. 3, all moving parts of the apparatus and connections are above the surface of the body of water, and can be accessed for maintenance. The floats on the buoyant platform, which are buoyancy tanks on the embodiment shown, provide the buoyancy needed to float the entire apparatus, and are of fixed buoyancy. Additional embodiments will be appreciated wherein the buoyant portions of the buoyant platform are of either fixed or variable buoyancy.

Whilst in the transport configuration, if the apparatus is in the desired location and the power umbilical is connected, the wind turbine can remain operational when the wave energy converters are not. This allows, for example, maintenance to be carried out on the wave energy converters whilst the wind turbine still generates power.

In the in-use configuration described and shown in FIG. 4, the buoyant platform is submerged to a level which allows the wave energy converters to function and generate energy. The wave energy converters may be on or close to the surface of the body of water and can be moved by waves. The wind turbine remains clear of the water in this configuration and can be accessed for maintenance whilst the wave energy converters continue to generate power.

Embodiments may be appreciated wherein the depth-setting member, or parts of the depth-setting member are preinstalled at the desired location of the apparatus prior to transport of the apparatus to said site. In such an example situation, to deploy the apparatus in the into its in-use configuration from its transport configuration, the apparatus is connected to preinstalled mooring lines which are attached to the bed of the body of water by respective anchoring members. The mooring lines are adjusted in length by winches on the depth-setting member. The winches reel-in the mooring lines to pull the buoyant platform beneath the surface of the body of water, overcoming the buoyancy in buoyant portions of the buoyant platform, to position the buoyant platform at a required depth.

In the storm configuration, the floats of the wave energy converters are retracted further underwater and preferably secured against the buoyant platform. The depth of the floats underwater in the storm configuration is such that they are protected from large forces that could otherwise be experienced on or close to the sea surface in storm waves. The connection member protrudes through the surface of the body of water such that it is high enough above the surface that storm waves are unable to reach the wind turbine tower. Therefore, the only part of the device that is ever exposed to storm waves is the framework of the connection member, which is made from a lattice structure, comprising beams having a thin cross section which allows waves to pass freely through its structure without experiencing high forces.

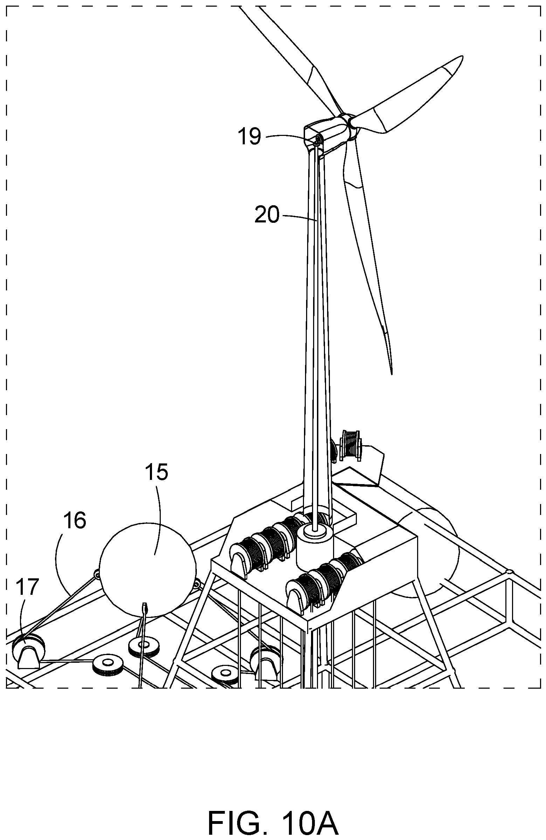

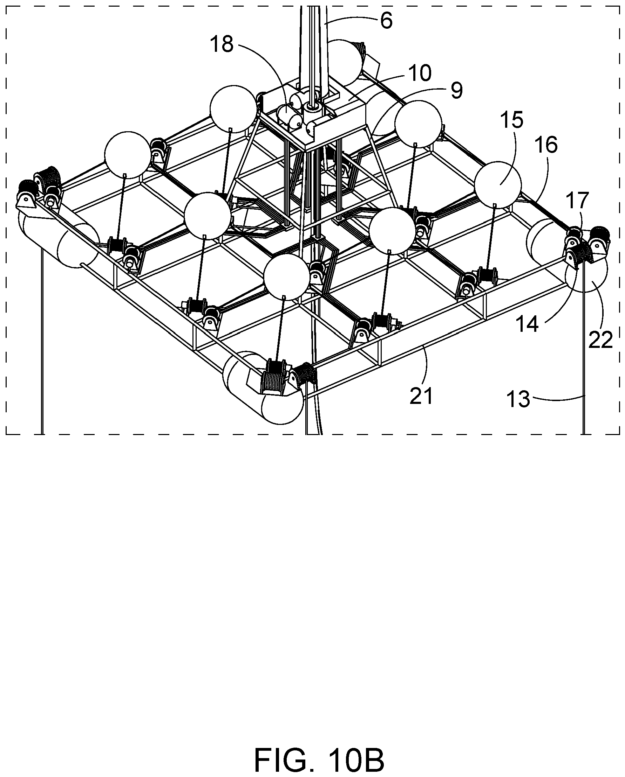

Alternative embodiments to that shown in FIG. 1 to 5 are shown in FIGs 10a and 10b. In FIG. 10a, the nacelle 5 of the wind turbine 3 contains gearing 19 that turns a driveshaft 20 that runs down the mast 6 to an energy converter 18 in the machinery room 10. The energy converter 18 would typically be a rotational electrical generator.

In FIG. 10b the wind energy converter and wave energy converter 15, 16, 17 convert wind and wave energy respectively to an interim form of energy, such as hydraulic or mechanical energy which is then transmitted to the machinery room 10 by hydraulic or mechanical means, to energy generators 18 housed within the machinery room 10. This has the advantage that more of the complex machinery is housed in a location that is simpler to engineer (e.g. not subsea) and simpler to access for maintenance (e.g. not subsea and not at the top of a wind turbine mast).

The buoyant platform 7 and connection member 9 comprises a substantially rectangular lattice framework 21 and positioned approximately at each of the corners of the lattice framework 21 is a buoyancy chamber 22. The buoyancy chambers 22 ensure the apparatus has a net positive buoyancy. Whilst the illustrated embodiment of the apparatus is shown with a substantially rectangular platform 7, it can be appreciated that other shapes, such as triangular or circular are possible.

The apparatus further comprises a power export cable 23 arranged to transfer energy generated by the apparatus to an undersea connector 24. The undersea connector 24 would typically be further connected to a fixed seabed cable (not shown) or an energy storage means (not shown).

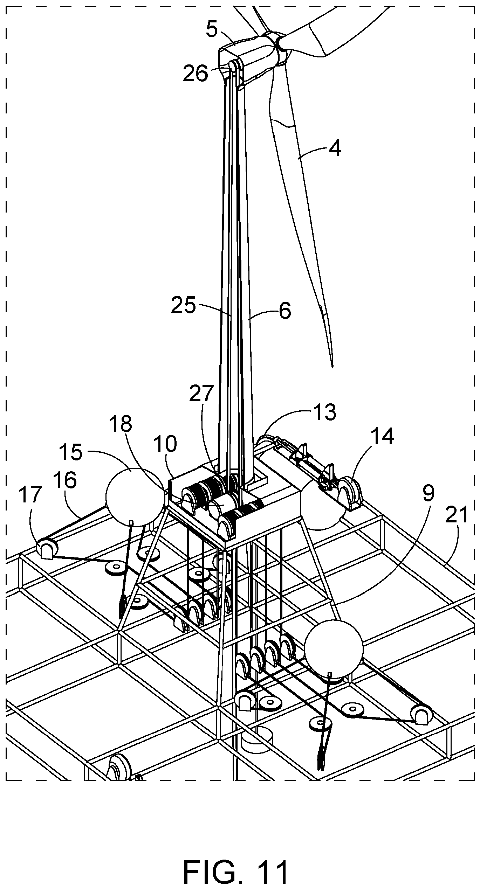

Referring to FIG. 11, an alternative embodiment of the invention is shown. The alternative embodiment is similar to the embodiment shown in FIGs 10a and 10b in all aspects except the energy transfer mechanism from the wind turbine 3 to the machinery room 10.

The alternative embodiment of the invention uses a drive belt 25 running down the inside of the turbine mast 6 instead of the driveshaft 20 of the first embodiment. The drivebelt 25 is driven by a pulley 26 in the nacelle 5 of the turbine and is connected to another pulley 27 in the machinery room 10 which turns a rotational energy converter 18.

It can be appreciated that the belt drive could be substituted for a chain drive and operate in a very similar manner.

Embodiments will be appreciated wherein the energy transfer mechanism from the wind turbine 3 and the wave energy converters 8 to the machinery room 10 is hydraulic. A hydraulic system might for example use a hydraulic generator in the nacelle 5 that converts the rotational energy in the wind turbine 3 into hydraulic energy which is transferred to an energy converter 18 in the machinery room 10 by hydraulic lines running down the inside of the mast 6.

The wave energy converter 8 comprises corner pulleys 17 that guide the coupling members 16 directly to hydraulic generators (not shown). The hydraulic generators connected by hydraulic lines to secondary energy converters in the machinery room 10.

An alternative embodiment, shown in FIG.10b may utilise a common secondary energy converter that converts hydraulic energy from both the wind turbine 3 and the wave energy converters 8 to electricity.

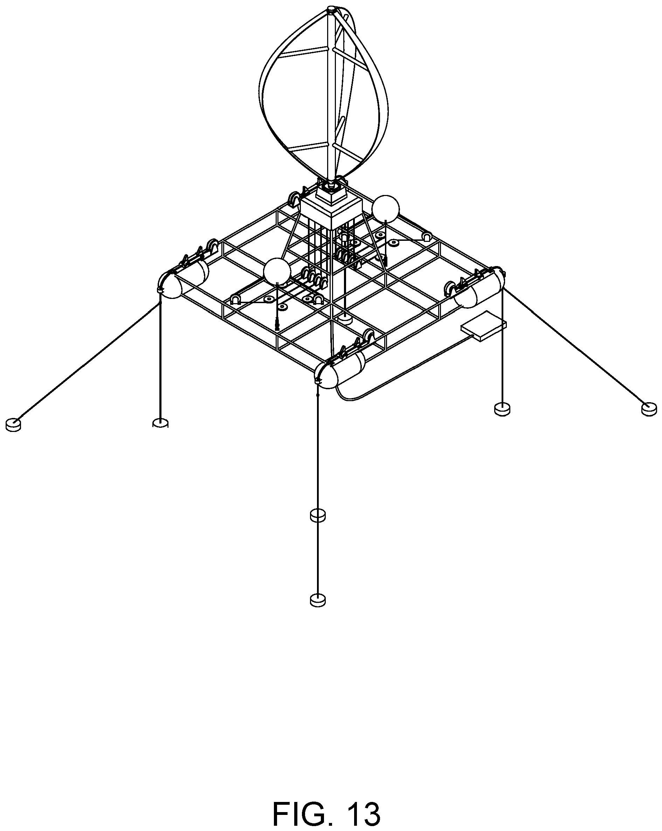

In the embodiments previously described, the wind energy converter comprises a horizontal axis wind turbine. Additional example embodiments will be appreciated, such as that shown in FIG. 13, wherein the wind energy converter comprises a vertical axis wind turbine.

It will be appreciated that the above described embodiments are given by way of example only and that various modifications thereto may be made without departing from the scope of the invention as defined in the appended claims. The housing described may contain all or part of either or both of the wind energy converting member or the wave energy converting member. The wave energy converting members may be the most crucial components to locate in the housing due to maintenance requirements in some situations.

## Claims

1. A buoyant energy converting apparatus (100) for converting energy obtained from renewable energy sources to useful energy, the apparatus (100) comprising:
a wind energy converter (3);
a buoyant platform (7) arranged to support the wind energy converter (3) in a body of water (150), the body of water (150) having a surface (1) and a bed (2); and
a connection member (9), the connection member (9) being positioned between
the wind energy converter (3) and the buoyant platform (7),
wherein the buoyant platform (7) comprises an in-use configuration in which the buoyant platform (7) is submerged in the body of water (150), and wherein in the in-use configuration the connection member (9) protrudes through the surface (1) of the body of water (150) such that the wind energy converter (3) is located substantially above the body of water (150);
wherein the apparatus (100) further comprises a wave energy converter (15, 16, 17) in communication with the buoyant platform (7), the wave energy converter (15, 16, 17) being arranged to convert wave energy from the body of water (150) to the useful energy
and wherein the wave energy converter (15, 16, 17) comprises a wave energy capturing member (15) coupled to a wave energy converting member (17), **characterised in that** the apparatus (100) further comprises a storm configuration, and wherein in the storm configuration, the wave energy capturing member (15) is non-operational and secured or docked more proximate the buoyant platform (7).

2. A buoyant energy converting apparatus (100) as claimed in claim 1, wherein the apparatus (100) further comprises:
i. a service configuration, wherein in the service configuration the buoyant platform (7) is substantially on the surface (1) of the body of water (150) with all serviceable elements of the apparatus (100) above the water (150), and the apparatus (100) is connected to a mooring means; and preferably wherein in the service configuration, the wind energy converter (3) is arranged to convert wind energy to the useful energy; and/or
ii. a transport configuration, wherein in the transport configuration the buoyant platform (7) is substantially on the surface (1) of the body of water (150), wherein the apparatus (100) is not coupled to a mooring means, and further wherein the apparatus (100) is able to stably free float on the surface (1) of the body of water (150).

3. A buoyant energy converting apparatus (100) according to any one of the preceding claims, wherein the wave energy converter (15, 16, 17) comprises a working depth at which the wave energy converter (15, 16, 17) provides an optimal energy conversion; and further wherein buoyant platform (7) in the in-use configuration comprises a buoyant platform depth; wherein the buoyant platform depth is substantially the same as the working depth.

4. A buoyant energy converting apparatus (100) according to any one of the preceding claims, wherein the wind energy converter (3) and wave energy converter (15, 16, 17) are arranged to convert each of wind energy and wave energy to a respective interim form of energy, wherein the respective interim forms of energy are transferred to a common secondary energy conversion apparatus; wherein the secondary energy conversion apparatus is arranged to combine the interim forms of energy, and export the combined interim forms of energy as a single form of desired output energy.

5. A buoyant energy converting apparatus (100) according to claim 4, wherein the apparatus (100) is arranged to convert either the wind energy or the wave energy to:
i. mechanical energy using one or more pulleys and gears; is further arranged to transfer the mechanical energy to the common secondary energy conversion apparatus; and wherein the secondary energy conversion apparatus is arranged to convert the mechanical energy to a different form of energy prior to exporting said different form of energy from the apparatus; or
ii. hydraulic energy using one or more hydraulic actuators; is further arranged to transfer the hydraulic energy to the common secondary energy conversion apparatus; and wherein the secondary energy conversion apparatus is arranged to convert the mechanical energy to a different form of energy prior to exporting said different form of energy from the apparatus.

6. A buoyant energy converting apparatus (100) according to any one of the preceding claims, wherein the apparatus (100) is arranged to convert either the wind energy or wave energy to a first form of energy; is further arranged to transfer the first form of energy to a common secondary energy conversion apparatus; and wherein the secondary energy conversion apparatus is arranged to convert the first form of energy to a second form of energy prior to exporting said second form of energy from the apparatus (100).

7. A buoyant energy converting apparatus (100) as claimed in any one of the preceding claims, wherein the wind energy converter (3) comprises: a wind energy primary converter and a wind energy transfer means.

8. A buoyant energy converting apparatus (100) as claimed in any one of the preceding claims, wherein the wave energy converter (15, 16, 17) comprises;
a wave energy primary converter;
a wave energy transfer means; and
a wave energy secondary converter.

9. A buoyant energy converting apparatus (100) as claimed in any one of the preceding claims, wherein in the in-use configuration, the wave energy capturing member (15) is positioned at or proximate the surface (1) of the body of water (150).

10. A buoyant energy converting apparatus (100) as claimed in any preceding claim, wherein:
i. the wave energy capturing member (15) is coupled to the wave energy converting member (17) by an adaptable coupling member (16) defining a distance between the wave energy capturing member (15) and the wave energy converting member (17); and/or
ii. the wave energy converter (15, 16, 17) is arranged to convert relative movement between said energy converting member (17) and said wave energy capturing member (15) to the useful energy; and/or
iii. the wave energy capturing member (15) comprises a float.

11. A buoyant energy converting apparatus (100) as claimed in any of the preceding claims, wherein in the in-use configuration, the apparatus is arranged to convert both wave energy and wind energy to the useful energy.

12. A buoyant energy converting apparatus (100) as claimed in any preceding claim, wherein the buoyant platform comprises an adaptable depth-setting means (13, 14) arranged to define, over a predetermined range:
a depth between an uppermost surface of the buoyant platform (7) and the surface (1) of the body of water (150).

13. A buoyant energy converting apparatus (100) as claimed in claim 12, wherein the adaptable depth-setting means (13, 14) comprises a tether (13) for tethering the buoyant platform (7) to the bed (2) of the body of water (150), and wherein the buoyancy of the buoyant platform (7) is arranged to provide an adequate tension in the tether (13), wherein the adequate tension provides a stability to the buoyant platform (7) when in the in-use configuration; and preferably wherein the stability and tension in the tether (13) is arranged to substantially inhibit movement of the buoyant platform (7); and/or preferably wherein the tether (13) comprises a substantially non-elastic material.

14. A buoyant energy converting apparatus (100) as claimed in any preceding claim, wherein at least a portion of the connection member (9) comprises a rigid open framework arranged to permit passage of water substantially through the connection member (9).

15. A buoyant energy converting apparatus (100) as claimed in any preceding claim, wherein the apparatus (100) further comprises a housing (10) having a storage cavity arranged to store equipment such as plant; motors; electricity generation means; and preferably wherein at least one of:
a. the buoyant platform length;
b. the buoyant platform width;
c. the buoyant platform diameter;
is selected from the range 20 to 200 metres.

## Patentansprüche

1. Eine Auftrieb habende Energiewandelvorrichtung (100) zum Umwandeln von aus erneuerbaren Energiequellen erhaltener Energie in nützliche Energie, wobei die Vorrichtung (100) Folgendes beinhaltet:
einen Windenergiewandler (3);
eine Auftrieb habende Plattform (7), die eingerichtet ist, um den Windenergiewandler (3) in einem Wasserkörper (150) zu tragen, wobei der Wasserkörper (150) eine Oberfläche (1) und ein Bett (2) aufweist; und
ein Verbindungselement (9), wobei das Verbindungselement (9) zwischen dem Windenergiewandler (3) und der Auftrieb habenden Plattform (7) positioniert ist, wobei die Auftrieb habende Plattform (7) eine In-Verwendung-Konfiguration beinhaltet, bei der die Auftrieb habende Plattform (7) in dem Wasserkörper (150) untergetaucht ist, und wobei das Verbindungselement (9) in der In-Verwendung-Konfiguration durch die Oberfläche (1) des Wasserkörpers (150) herausragt, sodass der Windenergiewandler (3) im Wesentlichen über dem Wasserkörper (150) befindlich ist;
wobei die Vorrichtung (100) ferner einen Wellenenergiewandler (15, 16, 17) in Kommunikation mit der Auftrieb habenden Plattform (7) beinhaltet, wobei der Wellenenergiewandler (15, 16, 17) eingerichtet ist, um Wellenenergie von dem Wasserkörper (150) in die nützliche Energie umzuwandeln, und
wobei der Wellenenergiewandler (15, 16, 17) ein Wellenenergiegewinnungselement (15) beinhaltet, das mit einem Wellenenergiewandelelement (17) gekoppelt ist, **dadurch gekennzeichnet, dass** die Vorrichtung (100) ferner eine Sturmkonfiguration beinhaltet, und wobei das Wellenenergiegewinnungselement (15) in der Sturmkonfiguration nicht funktionsbereit ist und näher an der Auftrieb habenden Plattform (7) gesichert oder angedockt ist.

2. Auftrieb habende Energiewandelvorrichtung (100) gemäß Anspruch 1, wobei die Vorrichtung (100) ferner Folgendes beinhaltet:
i. eine Wartungskonfiguration, wobei die Auftrieb habende Plattform (7) in der Wartungskonfiguration im Wesentlichen auf der Oberfläche (1) des Wasserkörpers (150) liegt, wobei alle wartungsfähigen Bestandteile der Vorrichtung (100) über dem Wasser (150) liegen und die Vorrichtung (100) mit einem Vertäuungsmittel verbunden ist; und wobei der Windenergiewandler (3) in der Wartungskonfiguration vorzugsweise eingerichtet ist, um Windenergie in die nützliche Energie umzuwandeln; und/oder
ii. eine Transportkonfiguration, wobei die Auftrieb habende Plattform (7) in der Transportkonfiguration im Wesentlichen auf der Oberfläche (1) des Wasserkörpers (150) liegt, wobei die Vorrichtung (100) nicht mit einem Vertäuungsmittel gekoppelt ist, und wobei ferner die Vorrichtung (100) in der Lage ist, auf der Oberfläche (1) des Wasserkörpers (150) stabil frei zu schwimmen.

3. Auftrieb habende Energiewandelvorrichtung (100) gemäß einem der vorhergehenden Ansprüche, wobei der Wellenenergiewandler (15, 16, 17) eine Arbeitstiefe beinhaltet, in der der Wellenenergiewandler (15, 16, 17) eine optimale Energiewandlung bereitstellt; und wobei die Auftrieb habende Plattform (7) ferner in der In-Verwendung-Konfiguration eine Tiefe der Auftrieb habenden Plattform beinhaltet; wobei die Tiefe der Auftrieb habenden Plattform im Wesentlichen gleich der Arbeitstiefe ist.

4. Auftrieb habende Energiewandelvorrichtung (100) gemäß einem der vorhergehenden Ansprüche, wobei der Windenergiewandler (3) und der Wellenenergiewandler (15, 16, 17) eingerichtet sind, um sowohl Windenergie als auch Wellenenergie in eine jeweilige Zwischenenergieform umzuwandeln, wobei die jeweiligen Zwischenenergieformen in eine gemeinsame sekundäre Energiewandlungsvorrichtung überführt werden; wobei die sekundäre Energiewandlungsvorrichtung eingerichtet ist, um die Zwischenenergieformen zu kombinieren und die kombinierten Zwischenenergieformen als eine einzige Form gewünschter Ausgabeenergie zu exportieren.

5. Auftrieb habende Energiewandelvorrichtung (100) gemäß Anspruch 4, wobei die Vorrichtung (100) eingerichtet ist, um entweder die Windenergie oder die Wellenenergie in Folgendes umzuwandeln:
i. mechanische Energie unter Verwendung einer/eines oder mehrerer Rollen und Getriebe; ferner eingerichtet ist, um die mechanische Energie an die gemeinsame sekundäre Energiewandlungsvorrichtung zu überführen; und wobei die sekundäre Energiewandlungsvorrichtung eingerichtet ist, um die mechanische Energie in eine andere Energieform umzuwandeln, bevor die andere Energieform aus der Vorrichtung exportiert wird; oder
ii. hydraulische Energie unter Verwendung eines oder mehrerer Hydraulikaktoren; ferner eingerichtet ist, um die hydraulische Energie an die gemeinsame sekundäre Energiewandlungsvorrichtung zu überführen; und wobei die sekundäre Energiewandlungsvorrichtung eingerichtet ist, um die mechanische Energie in eine andere Energieform umzuwandeln, bevor die andere Energieform aus der Vorrichtung exportiert wird.

6. Auftrieb habende Energiewandelvorrichtung (100) gemäß einem der vorhergehenden Ansprüche, wobei die Vorrichtung (100) eingerichtet ist, um entweder die Windenergie oder die Wellenenergie in eine erste Energieform umzuwandeln; ferner eingerichtet ist, um die erste Energieform an eine gemeinsame sekundäre Energiewandlungsvorrichtung zu überführen; und wobei die sekundäre Energiewandlungsvorrichtung eingerichtet ist, um die erste Energieform in eine zweite Energieform umzuwandeln, bevor die zweite Energieform aus der Vorrichtung (100) exportiert wird.

7. Auftrieb habende Energiewandelvorrichtung (100) gemäß einem der vorhergehenden Ansprüche, wobei der Windenergiewandler (3) Folgendes beinhaltet: einen Windenergieprimärwandler und ein Windenergieüberführungsmittel.

8. Auftrieb habende Energiewandelvorrichtung (100) gemäß einem der vorhergehenden Ansprüche, wobei der Wellenenergiewandler (15, 16, 17) Folgendes beinhaltet:
einen Wellenenergieprimärwandler;
ein Wellenenergieüberführungsmittel; und
einen Wellenenergiesekundärwandler.

9. Auftrieb habende Energiewandelvorrichtung (100) gemäß einem der vorhergehenden Ansprüche, wobei das Wellenenergiegewinnungselement (15) in der In-Verwendung-Konfiguration an oder nahe der Oberfläche (1) des Wasserkörpers (150) positioniert ist.

10. Auftrieb habende Energiewandelvorrichtung (100) gemäß einem der vorhergehenden Ansprüche, wobei:
i. das Wellenenergiegewinnungselement (15) durch ein anpassbares Kopplungselement (16), das einen Abstand zwischen dem Wellenenergiegewinnungselement (15) und dem Wellenenergiewandelelement (17) definiert, mit dem Wellenenergiewandelelement (17) gekoppelt ist; und/oder
ii. der Wellenenergiewandler (15, 16, 17) eingerichtet ist, um eine relative Bewegung zwischen dem Energiewandelelement (17) und dem Wellenenergiegewinnungselement (15) in die nützliche Energie umzuwandeln; und/oder
iii. das Wellenenergiegewinnungselement (15) einen Schwimmkörper beinhaltet.

11. Auftrieb habende Energiewandelvorrichtung (100) gemäß einem der vorhergehenden Ansprüche, wobei die Vorrichtung in der In-Verwendung-Konfiguration eingerichtet ist, um sowohl Wellenenergie als auch Windenergie in die nützliche Energie umzuwandeln.

12. Auftrieb habende Energiewandelvorrichtung (100) gemäß einem der vorhergehenden Ansprüche, wobei die Auftrieb habende Plattform ein anpassbares Tiefeneinstellmittel (13, 14) beinhaltet, das eingerichtet ist, um über einen vorgegebenen Bereich Folgendes zu definieren:
eine Tiefe zwischen einer obersten Oberfläche der Auftrieb habenden Plattform (7) und der Oberfläche (1) des Wasserkörpers (150).

13. Auftrieb habende Energiewandelvorrichtung (100) gemäß Anspruch 12, wobei das anpassbare Tiefeneinstellmittel (13, 14) eine Halteeinrichtung (13) zum Anbinden der Auftrieb habenden Plattform (7) an dem Bett (2) des Wasserkörpers (150) beinhaltet und wobei der Auftrieb der Auftrieb habenden Plattform (7) eingerichtet ist, um eine angemessene Spannung in der Halteeinrichtung (13) bereitzustellen, wobei die angemessene Spannung die Auftrieb habende Plattform (7) mit einer Stabilität versieht, wenn sie sich in der In-Verwendung-Konfiguration befindet; und wobei die Stabilität und die Spannung in der Halteeinrichtung (13) vorzugsweise eingerichtet sind, um die Bewegung der Auftrieb habenden Plattform (7) im Wesentlichen zu verhindern; und/oder wobei die Halteeinrichtung (13) vorzugsweise ein im Wesentlichen nicht elastisches Material beinhaltet.

14. Auftrieb habende Energiewandelvorrichtung (100) gemäß einem der vorhergehenden Ansprüche, wobei mindestens ein Abschnitt des Verbindungselements (9) ein steifes offenes Gestell beinhaltet, das eingerichtet ist, um den Durchgang von Wasser im Wesentlichen durch das Verbindungselement (9) zu gestatten.

15. Auftrieb habende Energiewandelvorrichtung (100) gemäß einem der vorhergehenden Ansprüche, wobei die Vorrichtung (100) ferner ein Gehäuse (10) beinhaltet, das einen Aufbewahrungshohlraum aufweist, der eingerichtet ist, um Ausrüstung wie etwa eine Anlage, Motoren, Elektrizitätserzeugungsmittel aufzubewahren; und wobei vorzugsweise mindestens eines von:
a. der Länge der Auftrieb habenden Plattform,
b. der Breite der Auftrieb habenden Plattform,
c. dem Durchmesser der Auftrieb habenden Plattform
aus dem Bereich von 20 bis 200 Meter ausgewählt ist.

## Revendications

1. Un appareil (100) flottable de conversion d'énergie pour convertir de l'énergie obtenue à partir de sources d'énergie renouvelable en énergie utile, l'appareil (100) comprenant :
un convertisseur d'énergie éolienne (3) ;
une plateforme flottable (7) prévue pour soutenir le convertisseur d'énergie éolienne (3) dans une masse d'eau (150), la masse d'eau (150) ayant une surface (1) et un lit (2) ; et
un organe de raccordement (9), l'organe de raccordement (9) étant positionné entre le convertisseur d'énergie éolienne (3) et la plateforme flottable (7),
où la plateforme flottable (7) comprend une configuration « en utilisation » dans laquelle la plateforme flottable (7) est submergée dans la masse d'eau (150), et où dans la configuration « en utilisation » l'organe de raccordement (9) fait saillie à travers la surface (1) de la masse d'eau (150) de telle sorte que le convertisseur d'énergie éolienne (3) est situé substantiellement au-dessus de la masse d'eau (150) ;
où l'appareil (100) comprend en outre un convertisseur d'énergie des vagues (15, 16, 17) en communication avec la plateforme flottable (7), le convertisseur d'énergie des vagues (15, 16, 17) étant prévu pour convertir de l'énergie des vagues provenant de la masse d'eau (150) en l'énergie utile et
où le convertisseur d'énergie des vagues (15, 16, 17) comprend un organe de captage d'énergie des vagues (15) couplé à un organe de conversion d'énergie des vagues (17), **caractérisé en ce que** l'appareil (100) comprend en outre une configuration « tempête », et où, dans la configuration « tempête », l'organe de captage d'énergie des vagues (15) est non opérationnel et assujetti ou arrimé plus à proximité de la plateforme flottable (7).

2. Un appareil (100) flottable de conversion d'énergie tel que revendiqué dans la revendication 1, où l'appareil (100) comprend en outre :
i. une configuration « entretien », où dans la configuration « entretien » la plateforme flottable (7) est substantiellement sur la surface (1) de la masse d'eau (150) avec tous les éléments entretenables de l'appareil (100) au-dessus de l'eau (150), et l'appareil (100) est raccordé à un moyen d'amarrage ; et de préférence où dans la configuration « entretien », le convertisseur d'énergie éolienne (3) est prévu pour convertir de l'énergie éolienne en l'énergie utile ; et/ou
ii. une configuration « transport », où dans la configuration « transport » la plateforme flottable (7) est substantiellement sur la surface (1) de la masse d'eau (150), où l'appareil (100) n'est pas couplé à un moyen d'amarrage, et en outre où l'appareil (100) est apte à flotter librement de façon stable sur la surface (1) de la masse d'eau (150).

3. Un appareil (100) flottable de conversion d'énergie selon l'une quelconque des revendications précédentes, où le convertisseur d'énergie des vagues (15, 16, 17) comprend une profondeur de travail à laquelle le convertisseur d'énergie des vagues (15, 16, 17) apporte un convertissement d'énergie optimal ; et en outre où la plateforme flottable (7) dans la configuration « en utilisation » comprend une profondeur de plateforme flottable ; où la profondeur de plateforme flottable est substantiellement la même que la profondeur de travail.

4. Un appareil (100) flottable de conversion d'énergie selon l'une quelconque des revendications précédentes, où le convertisseur d'énergie éolienne (3) et le convertisseur d'énergie des vagues (15, 16, 17) sont prévus pour convertir chaque forme parmi l'énergie éolienne et l'énergie des vagues en une forme d'énergie intermédiaire respective, où les formes d'énergie intermédiaires respectives sont transférées à un appareil de convertissement d'énergie secondaire commun ; où l'appareil de convertissement d'énergie secondaire est prévu pour combiner les formes d'énergie intermédiaires, et exporter les formes d'énergie intermédiaires combinées sous une seule forme d'énergie produite souhaitée.

5. Un appareil (100) flottable de conversion d'énergie selon la revendication 4, où l'appareil (100) est prévu pour convertir soit l'énergie éolienne, soit l'énergie des vagues, en :
i. énergie mécanique, à l'aide d'un ou de plusieurs poulies et engrenages ; est en outre prévu pour transférer l'énergie mécanique à l'appareil de convertissement d'énergie secondaire commun ; et où l'appareil de convertissement d'énergie secondaire est prévu pour convertir l'énergie mécanique en une forme d'énergie différente avant d'exporter ladite forme d'énergie différente de l'appareil ; ou
ii. énergie hydraulique, à l'aide d'un ou de plusieurs actionneurs hydrauliques ; est en outre prévu pour transférer l'énergie hydraulique à l'appareil de convertissement d'énergie secondaire commun ; et où l'appareil de convertissement d'énergie secondaire est prévu pour convertir l'énergie mécanique en une forme d'énergie différente avant d'exporter ladite forme d'énergie différente de l'appareil.

6. Un appareil (100) flottable de conversion d'énergie selon l'une quelconque des revendications précédentes, où l'appareil (100) est prévu pour convertir soit l'énergie éolienne, soit l'énergie des vagues, en une première forme d'énergie ; est en outre prévu pour transférer la première forme d'énergie à un appareil de convertissement d'énergie secondaire commun ; et où l'appareil de convertissement d'énergie secondaire est prévu pour convertir la première forme d'énergie en une deuxième forme d'énergie avant d'exporter ladite deuxième forme d'énergie de l'appareil (100).

7. Un appareil (100) flottable de conversion d'énergie tel que revendiqué dans l'une quelconque des revendications précédentes, où le convertisseur d'énergie éolienne (3) comprend : un convertisseur primaire d'énergie éolienne et un moyen de transfert d'énergie éolienne.

8. Un appareil (100) flottable de conversion d'énergie tel que revendiqué dans l'une quelconque des revendications précédentes, où le convertisseur d'énergie des vagues (15, 16, 17) comprend ;
un convertisseur primaire d'énergie des vagues ;
un moyen de transfert d'énergie des vagues ; et
un convertisseur secondaire d'énergie des vagues.

9. Un appareil (100) flottable de conversion d'énergie tel que revendiqué dans l'une quelconque des revendications précédentes, où dans la configuration « en utilisation », l'organe de captage d'énergie des vagues (15) est positionné à ou à proximité de la surface (1) de la masse d'eau (150).

10. Un appareil (100) flottable de conversion d'énergie tel que revendiqué dans n'importe quelle revendication précédente, où :
i. l'organe de captage d'énergie des vagues (15) est couplé à l'organe de conversion d'énergie des vagues (17) par un organe de couplage adaptable (16) délimitant une distance entre l'organe de captage d'énergie des vagues (15) et l'organe de conversion d'énergie des vagues (17) ; et/ou
ii. le convertisseur d'énergie des vagues (15, 16, 17) est prévu pour convertir un déplacement relatif entre ledit organe de conversion d'énergie (17) et ledit organe de captage d'énergie des vagues (15) en l'énergie utile ; et/ou
iii. l'organe de captage d'énergie des vagues (15) comprend un flotteur.

11. Un appareil (100) flottable de conversion d'énergie tel que revendiqué dans n'importe lesquelles des revendications précédentes, où dans la configuration « en utilisation », l'appareil est prévu pour convertir à la fois l'énergie des vagues et l'énergie éolienne en l'énergie utile.

12. Un appareil (100) flottable de conversion d'énergie tel que revendiqué dans n'importe quelle revendication précédente, où la plateforme flottable comprend un moyen de réglage de profondeur adaptable (13, 14) prévu pour délimiter, sur une plage prédéterminée :
une profondeur entre une surface la plus élevée de la plateforme flottable (7) et la surface (1) de la masse d'eau (150).

13. Un appareil (100) flottable de conversion d'énergie tel que revendiqué dans la revendication 12, où le moyen de réglage de profondeur adaptable (13, 14) comprend un ancrage (13) pour ancrer la plateforme flottable (7) au lit (2) de la masse d'eau (150), et où la flottabilité de la plateforme flottable (7) est prévue pour apporter une tension adéquate dans l'ancrage (13), où la tension adéquate apporte une stabilité à la plateforme flottable (7) lorsqu'elle est dans la configuration « en utilisation » ; et de préférence où la stabilité et la tension dans l'ancrage (13) est prévue pour réfréner substantiellement un déplacement de la plateforme flottable (7) ; et/ou de préférence où l'ancrage (13) est constitué d'un matériau substantiellement non élastique.

14. Un appareil (100) flottable de conversion d'énergie tel que revendiqué dans n'importe quelle revendication précédente, où au moins une partie de l'organe de raccordement (9) comprend une armature ouverte rigide pour permettre le passage d'eau substantiellement à travers l'organe de raccordement (9).

15. Un appareil (100) flottable de conversion d'énergie tel que revendiqué dans n'importe quelle revendication précédente, où l'appareil (100) comprend en outre un logement (10) ayant une cavité d'entreposage prévue pour entreposer de l'équipement tel que des engins ; des moteurs ; des moyens de génération d'électricité ; et de préférence où au moins l'un(e) parmi :
a. la longueur de la plateforme flottable ;
b. la largeur de la plateforme flottable ;
c. le diamètre de la plateforme flottable ;
est sélectionné(e) dans la plage allant de 20 à 200 mètres.
